# FASCICULE DE BREVET EUROPEEN

(11) **EP 1 866 370 B1**
(45) Date de publication et mention de la délivrance du brevet: **07.12.2011**
(21) Numéro de dépôt: 06726157.8
(22) Date de dépôt: 31.03.2006
(51) Int. Cl.: C08L 53/00, C08K 3/04, C09D 5/24, C01B 31/02, F16L 11/00, H01B 1/20, C08L 51/00

(54) **MATERIAUX POLYMERES CONTENANT DES NANOTUBES DE CARBONE A DISPERSION**
POLYMERMATERIALIEN MIT DISPERGIERTEN KOHLENSTOFFNANORÖHREN
POLYMER MATERIALS CONTAINING DISPERSED CARBON NANOTUBES

(30) Priorité: 04.04.2005 FR 0503332; 24.10.2005 US 729776 P
(43) Date de publication de la demande: 19.12.2007
(73) Titulaire: ARKEMA FRANCE, 92700 Colombes (FR); Centre National de la Recherche Scientifique, 75794 Paris Cedex 16 (FR)
(72) Inventeur: EL BOUNIA, Nour-Eddine, F-64300 Orthez (FR); LEIBLER, Ludwik, F-75016 Paris (FR); TENCE-GIRAULT, Sylvie, F-92130 Issy-les-Moulineaux (FR); SOULIE-ZIAKOVIC, Corinne, F-75013 Paris (FR)
(74) Mandataire: Lhoste, Catherine
(86) Numéro de dépôt international: PCT/FR2006/000708
(87) Numéro de publication internationale: WO 2006/106214

(56) Documents cités:
- EP-A- 1 359 121
- WO-A-2004/001107
- WO-A-2004/039893
- WO-A-2004/053546
- US-A- 4 559 164
- US-A- 4 663 230
- US-A- 4 664 900
- US-A1- 2003 111 646
- PATENT ABSTRACTS OF JAPAN vol. 2003, no. 12, 5 décembre 2003 (2003-12-05) & JP 2004 276232 A (MITSUBISHI ELECTRIC CORP), 7 octobre 2004 (2004-10-07)

## Description

### DOMAINE TECHNIQUE

La présente invention concerne des matériaux polymères contenant des nanotubes de carbone.

Du fait de leurs propriétés mécaniques et du ratio longueur/diamètre très élevés, les nanotubes de carbone (NTC) sont des matériaux présentant de grands avantages, tels qu'agents de renfort. De plus leurs propriétés électriques et thermiques permettent également de les utiliser pour modifier les propriétés conductrices des matériaux dans lesquels ils sont incorporés

Ils sont composés de feuillets graphitiques enroulés terminés par des hémisphères constitués de pentagones et d'hexagones de structure proche des fullerènes.

On connaît des nanotubes composés d'un seul feuillet et l'on parle alors de SWNT (pour Single Wall Nanotubes) ou de nanotubes composés de plusieurs feuillets concentriques appelés alors MWNT (pour Multi Wall Nanotubes), les SWNT étant en général plus difficiles à fabriquer que les MWNT.

### TECHNIQUE ANTERIEURE

Dans EP 692.136 sont décrits des compositions polymères contenant jusqu'à 20 % en poids de NTC ; ces compositions, thermoplastiques ou thermodurcissables, sont préparées par mélange à l'état fondu des polymères avec les NTC. Or, on constate que la dispersion des NTC au sein de la matrice polymère n'est pas homogène et les propriétés mécaniques et/ou électriques attendues sont insuffisantes.

Il existe une demande non satisfaite pour améliorer la façon de disperser des NTC au sein des matériaux polymères dans lesquels il sont incorporés afin d'obtenir des matériaux plus homogènes

EP 1.359.121 et EP 1.359.169 proposent d'améliorer la dispersion des NTC dans des matrices polymères par fonctionnalisation des NTC.

### EXPOSÉ DE L'INVENTION

La présente invention concerne un matériau polymère comprenant :
- 99 à 20 parties en poids de polymère(s),
- 0,1 à 80 parties en poids de nanotubes de carbone,
- 0,05 à 80 parties en poids d'au moins un dispersant choisi parmi les copolymères à blocs A-B-C, B-C et/ou C-B-C dans lesquels:
   ➢ chaque bloc est relié à l'autre au moyen d'une liaison covalente ou d'une molécule intermédiaire reliée à l'un des blocs par une liaison covalente et à l'autre bloc par une autre liaison covalente,
   ➢ C présente une interaction de type chimique et/ou physique avec le matériau polymère et de préférence est miscible avec ledit matériau,
   ➢ B n'est pas miscible avec le matériau polymère et avec le bloc C et sa température de transition vitreuse Tg est inférieure à la température d'utilisation du matériau polymère,
   ➢ A n'est pas miscible avec le matériau polymère, le bloc B et le bloc C et sa Tg ou sa température de fusion Tf est supérieure à la Tg de B.

Par polymère(s), on entend dans tout ce qui suit toute composition à base de polymère(s) de toute nature : thermoplastique ou thermodurcissable, rigide ou élastomérique, amorphe, cristallin et/ou semi-cristallin, homopolymère, copolymère; ces compositions peuvent être des mélanges d'un ou plusieurs différents polymères avec divers additifs, adjuvants et/ou charges classiquement ajoutés aux polymères, tels que stabilisants, plastifiants, catalyseurs de polymérisation, colorants, pigments, lubrifiants, ignifugeants, renforts et/ou charges, solvants de polymérisation.

Les polymères peuvent être des polymères contenant des fonctions de type époxyde et/ou glycidyle, éther, de type acide mono-, di- ou polycarboxylique, insaturé ou non, aromatique ou non, ou dérivé fonctionnel d'acide tel qu'anhydride, ester, amide et/ou imide, de type vinyle, vinyle aromatique, étant entendu que les définitions des polymères données ci-dessous peuvent être redondantes dans la mesure où certains polymères contiennent plusieurs des fonctions énumérées précédemment.

**Les polymères thermodurcissables sont en général** définis comme étant formé de chaînes polymères de longueur variable liées entre elles par des liaisons covalentes de manière à former un réseau tridimensionnel.

A titre d'exemple on peut citer les cyanoacrylates, les bismaléimides et les résines époxy reticulées par un durcisseur.

Parmi les cyanoacrylates on peut citer les 2-cyanoacrylic ester qui sont des matériaux thermodurcissables obtenus par polymérisation du monomère CH₂=C(CN)COOR avec différents groupements R possibles (sans nécessité d'ajouter un durcisseur).

Les formulations thermodures de type bismaléimide sont par exemple : méthylènedianiline + benzophénone dianhydride + nadic imide méthylènedianiline + benzophénone dianhydride + phénylacétylène méthylènedianiline + anhydride maléique + maléimide.

Le matériau thermodurcissable provient avantageusement de la réaction d'une résine époxy thermodurcissable et d'un durcisseur. Il est défini aussi comme tout produit de la réaction d'un oligomère porteur de fonctions oxirane et d'un durcisseur. De par les réactions mises en jeu lors de la réaction des ces résines époxy on aboutit à un matériau réticulé correspondant à un réseau tridimensionnel plus ou moins dense selon les caractéristiques de base des résines et durcisseurs employés.

**Par polymère de type époxy,** on entend tout composé organique possédant au moins deux fonctions de type oxirane, polymérisable par ouverture de cycle. Le terme "polymères époxy" désigne toutes les résines époxy usuelles liquides à température ambiante (23°C) ou à température plus élevée. Ces résines époxy peuvent être monomériques ou polymériques d'une part, aliphatiques, cycloaliphatiques, hétérocycliques ou aromatiques d'autre part. A titre d'exemples de telles résines époxy, on peut citer le diglycidyl éther de résorcinol, le diglycidyl éther de bisphénol A, le triglycidyl p-amino phénol, le diglycidyléther de bromo-bisphénol F, le triglycidyléther de m-amino phénol, le tétraglycidyl méthylène dianiline, le triglycidyl éther de (trihydroxyphényl) méthane, les polyglycidyl éthers de phénol-formaldéhyde novolac, les polyglycidyls éthers d'orthocrésol novolac et les tétraglycidyl éthers de tétraphényl éthane. Des mélanges d'au moins deux de ces résines peuvent aussi être utilisés.

On préfère les résines époxy possédant au moins 1.5 fonctions oxirane par molécule et plus particulièrement les résines époxy contenant entre 2 et 4 fonctions oxirane par molécule. On préfère également les résines époxy possédant au moins un cycle aromatique comme les diglycidyls éthers de bisphénol A.

S'agissant du durcisseur de manière générale on utilise comme durcisseurs les durcisseurs des résines époxy qui réagissent à température ambiante ou à des températures supérieures à la température ambiante. A titre d'exemples non limitatif on peut citer :
- les anhydrides d'acide, parmi lesquels l'anhydride succinique,
- les polyamines aromatiques ou aliphatiques, parmi lesquelles la diamino diphényl sulphone (DDS) ou encore la méthylène dianiline ou encore la 4,4'-Méthylènebis-(3-chloro-2,6-diéthylaniline) (MCDEA),
- la dicyandiamide et ses dérivées.
- les imidazoles
- les acides polycarboxyliques
- Les polyphénols

S'agissant des polymères à fonctions époxyde et/ou glycidyle, on peut également citer les copolymères d'éthylène et d'au moins un époxyde insaturé qui peuvent être obtenus par copolymérisation de l'éthylène et du ou des époxydes insaturés ou par greffage du ou des époxydes insaturés sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

Par polyéthylènes, on entend dans le présent fascicule, les homo- et copolymères d'éthylène.

A titre de comonomères d'éthylène, on peut citer :
- les alpha-oléfines, avantageusement celles ayant de 3 à 30 atomes de carbone ; à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène; le 1-dococène, le 1-tétracocène, le 1-hexacocène, le 1-octacocène, et le 1-triacontène ; ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyéthylène peut comprendre plusieurs des comonomères précédents.

Avantageusement le polyéthylène, qui peut être un mélange de plusieurs polymères, comprend au moins 50% et de préférence 75% (en moles) d'éthylène, sa densité peut être comprise entre 0,86 et 0,98 g/cm³. Le MFI (indice de viscosité à 190°C sous une charge de 2,16 kg) est compris avantageusement entre 20 et 1.000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, hexène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). L'hafnium peut aussi être utilisé comme métal auquel le cyclopentadiène, est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

A titre d'exemples d'époxydes insaturés, on peut citer :
- les esters et éthers de glycidyle aliphatiques tels que l'allyle glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl dicarboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

Les polymères à fonctions époxyde et/ou glycidyle comprennent également les polymères listés précédemment dont une partie du ou des monomères à fonctions époxyde et/ou glycidyle est remplacée par des monomères insaturés copolymérisables avec les monomères à fonctions époxyde et/ou glycidyle, et notamment les esters (méth)acryliques, tel que par exemple les terpolymères éthylène-méthacrylate de méthyle-(méth)acrylate de glycidyle.

Ainsi, le polymère à fonctions époxyde et/ou glycidyle peut avantageusement être un copolymère éthylène/(méth)acrylate d'alkyle/époxyde insaturé. Avantageusement il peut contenir jusqu'à 40 % en poids de (méth)acrylate d'alkyle, de préférence 5 à 40 % et jusqu'à 10 % en poids d'époxyde insaturé, de préférence 0,1 à 8 %. L'époxyde est avantageusement le (méth)acrylate de glycidyle.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 20 à 35 %. Le MFI est avantageusement compris entre 5 et 100 (mesuré en g/10 min à 190°C sous 2,16 kg), la température de fusion est comprise entre 60 et 110 °C. Ce copolymère peut être obtenu par polymérisation radicalaire des monomères.

Parmi les polymères à fonctions époxyde commerciaux, on peut par exemple citer les LOTADER® GMA (terpolymère éthylène-méthacrylate de méthyle-méthacrylate de glycidyle) commercialisés par ARKEMA.

S'agissant des polymères à fonctions acide et/ou anhydride d'acide, on peut citer les polyoléfines greffées par un anhydride d'acide carboxylique insaturé ainsi que les copolymères d'oléfine et d'anhydride d'acide carboxylique insaturé qu'on obtient par exemple par polymérisation radicalaire et plus particulièrement ceux à base d'éthylène tels que définis précédemment.

L'anhydride d'acide carboxylique insaturé peut être choisi parmi les anhydrides maléique, itaconique, citraconique, allylsuccinique, cyclohex-4-ène-1,2-dicarboxylique, bicyclo(2,2,1)hept-5-ène-2,3- dicarboxylique, 4-méthylènecyclohex-4-ène-1,2-dicarboxylique et x-méthylbicyclo(2,2,1) hept-5-ène-2,2- dicarboxylique. On utilise avantageusement l'anhydride maléique. On ne sortirait pas du cadre de l'invention en remplaçant tout ou partie de l'anhydride par un ou plusieurs acides carboxyliques insaturés tel que par exemple l'acide (méth)acrylique.

S'agissant des copolymères de l'éthylène et de l'anhydride d'acide carboxylique insaturé, c'est-à-dire ceux dans lesquels l'anhydride d'acide carboxylique insaturé n'est pas greffé, il s'agit des copolymères de l'éthylène, de l'anhydride d'acide carboxylique insaturé et éventuellement d'un autre monomère pouvant être choisi parmi les comonomères cités plus haut pour les copolymères de l'éthylène destinés à être greffés.

On utilise avantageusement les copolymères éthylène-anhydride maléique et éthylène - (méth)acrylate(s) d'alkyle(s) - anhydride maléique. Ces copolymères comprennent en général de 0,2 à 10 % en poids d'anhydride maléique, de 0 à 40 % et de préférence 5 à 40 % en poids de (méth)acrylate d'alkyle. Leur MFI est compris entre 20 et 100 (190°C - 2,16 kg). Les (méth)acrylates d'alkyle(s) ont déjà été décrits plus haut. La température de fusion est comprise entre 80 et 120°C.

De tels copolymères sont disponibles dans le commerce ; ils sont préparés par polymérisation radicalaire à une pression pouvant être comprise entre 200 et 2500 bars et sont vendus sous forme de granulés. On peut les mettre en poudre par exemple par microgranulation en utilisant la technique de la coupe sous eau de la société GALA (Virginie, USA) ou par broyage cryogénique.

S'agissant des polymères à fonctions dérivés d'acide de type ester, on peut citer les polymères de type (alkyl) acrylate ou polymères acryliques, les homo-et copolymères d'un ou plusieurs (alkyl)acrylates d'alkyle, qui sont notamment décrits dans KIRK OTHMER, Encyclopedia of Chemical Technology, 4ème édition, vol 1, pages 292-293 et vol 16, pages 475-478. On peut aussi citer les copolymères d'un ou plusieurs (alkyl)acrylates d'alkyle et d'au moins un monomère choisi parmi l'acrylonitrile, le butadiène, le styrène, l'isoprène, pourvu que la proportion d'(alkyl)acrylates d'alkyle soit d'au moins 50 % en moles.

S'agissant des polymères à fonctions dérivés d'acide de type ester, on peut aussi citer les polymères contenant des motifs dérivés d'un ou plusieurs esters vinyliques d'acides carboxyliques saturés tels que par exemple l'acétate ou le propionate de vinyle. On peut par exemple citer les copolymères d'éthylène et d'acétate de vinyle, commercialisés notamment sous les dénominations EVATANE®, ELVAX®, ULTRATHENE®.

S'agissant des polymères à fonctions amide, on peut citer les polymères issus de la condensation :
- d'un ou plusieurs aminoacides, tels les acides aminocaproïques, amino-7-heptanoïque, amino-11-undécanoïque (PA-11) et amino-12-dodécanoïque (PA-12) ou d'un ou plusieurs lactames tels que caprolactame (PA-6), oenantholactame et lauryllactame ;
- d'un ou plusieurs sels ou mélanges de diamines telles que l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de certains de ces monomères ce qui conduit à des copolyamides, par exemple le PA-6/12 par condensation du caprolactame et du lauryllactame.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
- le PA 6-12 résultant de la condensation de l'hexaméthylène diamine et de l'acide 1,12-dodecanedioïque,

A titre d'exemples de polyamides aliphatiques résultant de la condensation d'une diamine aliphatique ayant de 6 à 12 atomes de carbone et d'un diacide aliphatique ayant de 9 à 12 atomes de carbone et des aminoacides on peut citer :
- le PA 6/6,6/12 résultant de la condensation de caprolactame et d'hexaméthylène diamine et d'acide adipique et de lauryllactame

Le polymère à fonctions amide peut être plastifié. S'agissant du ou des plastifiants, ils sont en général choisis parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). Le ou les plastifiants peuvent être introduits dans le polyamide pendant la polycondensation ou ultérieurement. La proportion de plastifiant peut en général aller jusqu'à 30 % en poids du polymère à fonctions amide.

Le polymère à fonctions amide peut également être un copolymère à blocs polyamides et blocs polyéthers (PEBA) résultant de la copolycondensation de séquences polyamides à extrémités réactives avec des séquences polyéthers à extrémités réactives, telles que, entre autres :
1) séquences polyamides à bouts de chaîne diamines avec des séquences polyoxyalkylènes à bouts de chaînes dicarboxyliques.
2) séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides. Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

La quantité de blocs polyéther dans ces copolymères à blocs polyamides et blocs polyéthers représente en général 10 à 70% en poids du copolymère.

Les blocs polyétherdiols sont soit utilisés tels quels et copolycondensés avec des blocs polyamides à extrémités carboxyliques, soit aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

Parmi les polymères à fonctions amide commerciaux, on peut par exemple citer les NYLON®, GRILAMID®, RILSAN® qui sont des polyamides aliphatiques *et* les PEBAX®, VESTAMID® qui sont des PEBA.

S'agissant des polyuréthanes, ils sont constitués de blocs polyéthers souples qui sont des restes de polyétherdiols et de blocs rigides (polyuréthanes) qui résultent de la réaction d'au moins un diisocyanate avec au moins un diol court. Le diol court allongeur de chaîne peut être choisi parmi les glycols cités plus haut dans la description des polyétheresters. Les blocs polyuréthanes et les blocs polyéthers sont reliés par des liaisons résultant de la réaction des fonctions isocyanates avec les fonctions OH du polyétherdiol.

On peut encore citer les polyesteruréthannes par exemple ceux comprenant des motifs diisocyanates, des motifs dérivés de polyesters diols amorphes et des motifs dérivés d'un diol court allongeur de chaîne. Ils peuvent contenir des plastifiants.

A titre d'exemple de polyuréthannes thermoplastiques commerciaux, on peut par exemple citer les ELASTOLLAN® de Elastogran Bayer.

S'agissant des polymères à fonctions éther, on peut citer les polyoxyalkylènes et notamment le polyoxyméthylène (POM), les copolymères à blocs poly-(oxyde propylène- oxyde éthylène) et le polyphénylèneoxyde (PPO).

On peut également citer les polyalkylène glycols qui sont des polyéthers terminés par des fonctions hydroxyle, tel que le polyéthylène glycol (PEG), le polypropylène glycol, le polytétraméthylène glycol (PTMG) ainsi que les polyétheresters qui sont des copolymères à blocs polyesters et blocs polyéthers. Ils sont constitués de blocs polyéthers souples qui sont les restes de polyétherdiols et de segments rigides (blocs polyesters) qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide avec les fonctions OH du polyétherdiol. Le diol court allongeur de chaîne peut être choisi dans le groupe constitué du neopentylglycol, du cyclohexanediméthanol et des glycols aliphatiques de formule HO(CH₂)ₙOH dans laquelle n est un entier valant de 2 à 10. Avantageusement les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

A titre d'exemple d'acides aromatiques dicarboxyliques on peut citer l'acide téréphtalique, isophtalique, bibenzoïque, naphtalène dicarboxylique, l'acide 4,4'-diphénylenedicarboxylique, le bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoïque). A titre d'exemple de glycols on peut citer l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol et le 1,4-cyclohexane diméthanol. Les copolymères à blocs polyesters et blocs polyéther sont par exemple des copolymères ayant des motifs polyéthers dérivés de polyétherdiols tels que le PEG, le PPG ou le PTMG, des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester. De tels copolyétheresters sont par exemple décrits dans les brevets EP 402 883 et EP 405 227. Ces polyétheresters sont des élastomères thermoplastiques ; ils peuvent contenir des plastifiants.

Parmi les polymères à fonctions éther commerciaux, on peut par exemple citer les ALCON®, HOSTAFORM qui sont du POM, les ARNITEL®, HYTREL®, LOMOD® qui sont des poly éther ester à blocs ainsi que les PEBAX®, VESTAMID® qui sont des poly éther ester amide à blocs.

S'agissant des polymères à fonctions vinyle, on entend les polymères, homo- et copolymères, qui dérivent notamment de monomère(s) vinylique(s), tel que le chlorure de vinyle. A titre d'exemple de polymères vinyliques on peut citer le polyclorure de vinyle (PVC), le PVC surchloré.

S'agissant des polymères à fonctions vinyle aromatique, on entend les polymères, homo- et copolymères, qui dérivent notamment de monomère(s) aromatique(s) à insaturation éthylénique, tel que le styrène, le vinyltoluène, l'alphaméthyl styrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le ter-butyl-3-styrène, le dichloro-2,4-styrène, le dichloro-2,6-styrène et le vinyl-1-naphtalène. A titre d'exemple de polymères styréniques on peut citer le polystyrène (PS) le PS modifié par des élastomères, les copolymères du styrène et de l'acrylonitrile (SAN), le SAN modifié par des élastomères en particulier l'ABS que l'on obtient par exemple par greffage (graft polymerisation) de styrène et d'acrylonitrile sur un tronc de polybutadiène ou de copolymère butadiène-acrylonitrile, les mélanges de SAN et d'ABS, le polyalpha-méthyl styrène, le chloropolystyrène.

Les élastomères mentionnés ci-dessus peuvent être par exemple l'EPR (abréviation usuelle d'ethylene propylene rubber ou élastomère éthylène propylène), l'EPDM (abréviation usuelle d'ethylene propylene diene rubber ou élastomère éthylène-propylène-diène), le polybutadiène, le copolymère acrylonitrile-butadiène, le polyisoprène, le copolymère isoprène- acrylonitrile.

Le PS choc peut être obtenu (i) soit par mélange de PS avec des élastomères tel que le polybutadiène, des copolymères du butadiène et de l'acrylonitrile, du polyisoprène ou des copolymères isoprène- acrylonitrile, (ii) soit plus habituellement par greffage du styrène (graft polymerisation) sur un tronc de polybutadiène ou de copolymère butadiène-acrylonitrile.

Les polymères styréniques comprennent également les polymères listés précédemment dont une partie du ou des monomères styréniques est remplacée par des monomères insaturés copolymérisables avec les monomères styréniques, et notamment les esters (méth)acryliques.

A titre d'exemples de copolymères du styrène, on peut citer les copolymères styrène-chlorostyrène, les copolymères styrène-propylène, les copolymères styrène-butadiène, les copolymères styrène-isoprène, les copolymères styrène-chlorure de vinyle, les copolymères styrène-acétate de vinyle, les copolymères styrène-acrylate d'alkyle (acrylate de méthyle, éthyle, butyle, octyle, phényle) les copolymères styrène-méthacrylate d'alkyle (méthacrylate de méthyle, éthyle, butyle, octyle, phényle) les copolymères styrène-chloroacrylate de méthyle et les copolymères styrène-acrylonitrile-(méth)acrylate d'alkyle. Dans ces copolymères, la teneur en comonomère(s) va généralement jusqu'à 20 % en poids.

Parmi les polymères à fonctions vinylaromatique commerciaux, on peut par exemple citer les FINAPRENE® (SBS &SBR), KRALON®(ABS), KRATON® (SBS & SEBS), LACQRAN® (ABS), LACQRENE® (PS et PS modifié choc) LACQSAN® (SAN) DYLARC® (SMA) (poly styrène.co- anhydride maléique à faible teneur en anhydride maléique et poly styrène.co- anhydride maléique à forte teneur en anhydride maléique).

On peut également citer les polyoléfines fonctionnalisées portant au moins une fonction acide carboxylique ou anhydride d'acide carboxylique.

Les polyoléfines fonctionnalisées peuvent être des polymères polyoléfiniques non fonctionnalisés avec des motifs réactifs (les fonctionnalités); les polyoléfines non fonctionnalisées sont classiquement des homo- ou copolymères d'alpha oléfines ou de dioléfines, telles que par exemple, éthylène, propylène, butène-1, octène-1, butadiène. A titre d'exemple, on peut citer :
- les homo polymères et copolymères de l'éthylène, en particulier LDPE, HDPE, LLDPE (mis pour « linear low density polyethylene » c'est-à-dire polyéthylène basse densité linéaire), VLDPE (mis pour « very low density polyethylene » c'est-à-dire polyéthylène très basse densité) et le polyéthylène métallocène .
- les homopolymères ou copolymères du propylène,
- les copolymères éthylène/alpha-oléfine tels qu'éthylène/propylène, les EPR (abréviation d'ethylène-propylene-rubber, c'est-à-dire caoutchouc d'éthylène -propylène) et éthylène/propylène/diène (EPDM),
- les copolymères blocs styrène/éthylène-butène/styrène (SEBS), styrène/butadiène/styrène (SBS), styrène/isoprène/ styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère(s) pouvant atteindre 40 % en poids,
- les mélanges d'au moins deux des polyoléfines citées précédemment, par exemple un polypropylène mélangé avec un copolymère EPR ou EPDM ; ce dernier pouvant éventuellement être plastifié ou réticulé en cours de mélangeage.

Avantageusement les polyoléfines non fonctionnalisées sont choisies parmi les homopolymères ou copolymères du propylène et tout homo polymère de l'éthylène ou copolymère de l'éthylène et d'un comonomère de type alpha oléfinique tel que le propylène, le butène, l'hexène, l'octène ou le 4-méthyl 1-pentène. On peut citer par exemple les PP, les PE de haute densité, PE de moyenne densité, PE basse densité linéaire, PE basse densité, PE de très basse densité. Ces polyéthylènes sont connus par l'homme de l'art comme étant produits selon un procédé « radicalaire », selon une catalyse de type « Ziegler » ou, plus récemment, selon une catalyse dite « métallocène ».

Les polyoléfines non fonctionnalisées peuvent également être choisies parmi les polyalphaoléfines amorphes (APAO). De préférence, on utilise les APAO dérivées de l'éthylène, du propylène, du butène ou de l'hexène. On utilise avantageusement soit des copolymères éthylène propylène butène à haute teneur en butène, soit des copolymères éthylène propylène butène à haute teneur en propylène soit des homo ou copolymères du butène.

Les motifs réactifs ou fonctionnalités sont les fonctions acides ou anhydrides. À titre d'exemple, on peut citer les polyoléfines précédentes greffées ou co- ou ter polymérisées par des acides carboxyliques ou les sels ou esters correspondants tels que l'acide (méth)acrylique ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5 % en poids.

Les polyoléfines fonctionnalisées peuvent être choisies parmi les (co)polymères suivants, greffés avec anhydride maléique, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR (abréviation d'ethylene-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée peut aussi être un co- ou ter polymère d'éthylène et d'au moins un des monomères suivants : (méth)acrylate d'alkyle ou ester vinylique d'acide carboxylique saturé et anhydride tel qu'anhydride maléique ou acide (méth)acrylique.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle/acide (méth)acrylique ou anhydride maléique;
- les copolymères éthylène/acétate de vinyle/anhydride maléique;
- les copolymères éthylène/acétate de vinyle ou (méth)acrylate d'alkyle / acide (méth)acrylique ou anhydride maléique.

Le terme "(méth)acrylate d'alkyle" désigne dans ce qui précède les méthacrylates et les acrylates d'alkyle en C1 à C12, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères oléfiniques fonctionnalisés ou non mentionnés ci-dessus, peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. Le MFI, abréviation usuelle de Melt Flow Index, est l'indice de fluidité à l'état fondu. On le mesure selon la norme ASTM 1238.

Avantageusement les polyoléfines fonctionnalisées sont choisies parmi tout polymère comprenant des motifs alpha oléfiniques et des motifs porteurs de fonctions réactives polaires comme les fonctions acide carboxylique ou anhydride d'acide carboxylique. A titre d'exemples de tels polymères, on peut citer les ter polymères de l'éthylène, d'acrylate d'alkyle et d'anhydride maléique comme certains LOTADER^{®} commercialisé par ARKEMA ou des polyoléfines greffées par de l'anhydride maléique comme certains OREVAC^{®} commercialisé par ARKEMA ainsi que des terpolymères de l'éthylène, d'acrylate d'alkyle et d'acide (méth) acrylique ou des terpolymères de l'éthylène, d'acétate de vinyle et d'anhydride maléique comme certains OREVAC^{®} commercialisé par ARKEMA.

On peut également citer les fluoropolymères correspondant aux polymères ayant dans leur chaîne au moins un monomère choisi parmi les composés contenant un groupe vinyle capable de s'ouvrir pour se polymériser et qui contiennent, directement attaché à ce groupe vinyle, au moins un atome de fluor, un groupe fluoroalkyle ou un groupe fluoroalkoxy.

A titre d'exemple de monomères, on peut citer le fluorure de vinyle; le fluorure de vinylidène (VF2); le trifluoroéthylène (VF3); le chlorotrifluoroéthylène (CTFE); le 1,2-difluoroéthylène; le tétrafluoroéthylène (TFE); l'hexafluoropropylène (HFP); les perfluoro(alkyl vinyl éther)s tels que le perfluoro(méthyl vinyléther) (PMVE), le perfluoro(éthyl vinyl éther) (PEVE) et le perfluoro(propyl vinyl éther) (PPVE); le perfluoro( 1,3 -dioxole); le perfluoro(2,2-diméthyl- 1,3 -dioxole) (PDD); le produit de formule CF₂=CFOCF₂CF(CF₃)OCF₂CF₂X dans laquelle X est SO₂F, CO₂H, CH₂OH, CH₂OCN ou CH₂OPO₃H; le produit de formule CF₂=CFOCF₂CF₂SO₂F; le produit de formule F(CF₂)ₙCH₂OCF=CF₂ dans laquelle n est 1, 2, 3, 4 or 5; le produit de formule R1CH₂OCF=CF₂ dans laquelle R1 est l'hydrogène ou F(CF₂)_{z} et z vaut 1, 2, 3 ou 4; le produit de formule R3OCF=CH₂ dans laquelle R3 est F(CF₂)_{z}- et z est 1, 2, 3 or 4; le perfluorobutyl éthylène (PFBE); le 3,3,3-trifluoropropène et le 2-trifluorométhyl-3,3,3-trifluoro-1-propène.

Parmi les fluoropolymères listés précédemment, les homo- et copolymères de fluorure de vinylidène sont préférés.

A titre d'exemples de polymères entrant dans les compositions selon l'invention, on citera tout particulièrement les Lotader®, Lotryl®, Evatane®, Elvalloy®, Orevac® , *Pebax*®, Rilsan® , commercialisés par ARKEMA ainsi que les Hytrel® commercialisés par Du Pont, les Noryl® commercialisés par GE Plastics mais aussi les compounds chargés bois et/ou lignine à base de l'un au moins des ces polymères et/ou d'au moins une polyoléfine au sens donnée plus haut.

Les nanotubes de carbone mis en oeuvre peuvent être de tout type : NTC, MWNT, SWNT, fonctionnalisés ou non.

De préférence, les nanotubes de carbone ont un rapport de forme (L/D) supérieur ou égal à 5 et de préférence supérieur ou égale à 50 et avantageusement supérieur ou égal à 100.

Avantageusement, les nanotubes de carbone ont un diamètre compris entre 0,4 et 50 nm et une longueur comprise 100 et 100.000 fois leur diamètre.

Suivant un mode de réalisation de l'invention préférée, les nanotubes de carbone sont sous forme multi-parois (MWT), leur diamètre étant compris entre 5 et 30 nm et leur longueur étant supérieure ou égale à 0,3 µm.

La quantité de nanotubes de carbone représente de manière avantageuse de 0,1 à 30 parties en poids, et avantageusement de 0,5 à 20 parties en poids de la masse totale du matériau polymère.

**S'agissant du dibloc B-C,** C peut être obtenu par la polymérisation d'au moins un monomère choisi dans le groupe contenant le styrène et les méthacrylates à chaîne courte tels que le méthacrylate de méthyle ; C est de préférence constitué de monomères de méthacrylate de méthyle ou contient au moins 50% en masse de méthacrylate de méthyle, de préférence au moins 75% en masse de méthacrylate de méthyle. Les autres monomères constituant le bloc C peuvent être des monomères acryliques ou non, être réactifs ou non. Par monomère réactif on entend : un groupement chimique capable de réagir avec au moins une des fonctions du ou des polymère(s) ou avec les groupements chimiques du durcisseur, dans le cas où le ou les polymère(s) sont de type thermodurcissable et contien(nen)t un durcisseur. A titre d'exemples non limitatif de fonctions réactives on peut citer : les fonctions oxiranes, les fonctions amines, les fonctions anhydrides, les fonctions acides carboxyliques. Le monomère réactif peut être l'acide (méth)acrylique ou tout autre monomère hydrolysable conduisant à ces acides. Parmi les autres monomères pouvant constituer le bloc C, on peut citer à titre d'exemple non limitatif le (méth)acrylate de glycidyle, le (méth)acrylate de tertiobutyle. Avantageusement C est constitué de PMMA syndiotactique à au moins 60 %.

Avantageusement la Tg de B est inférieure à 0 °C et de préférence inférieure à - 20 °C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg (vers -90° C) inférieure à celle du polybutadiène-1,2. (vers 0° C). Les blocs B peuvent aussi être hydrogénés. On effectue cette hydrogenation selon les techniques habituelles.

Le monomère utilisé pour synthétiser le bloc B élastomérique peut être aussi un (méth)acrylate d'alkyle, on obtient les Tg suivantes entre parenthèses suivant le nom de l'acrylate: l'acrylate d'éthyle (-24 °C), l'acrylate de butyle, (-54 °C), l'acrylate de 2-éthylhexyle (-85 °C), l'acrylate d'hydroxyéthyle (-15 °C) et le méthacrylate de 2-éthylhexyle (-10 °C). On utilise avantageusement l'acrylate de butyle. Les acrylates sont différents de ceux du bloc c pour respecter la condition de B et C ne sont pas miscibles.

De préférence les blocs B sont constitués en majorité de polybutadiène-1,4.

Le dibloc B-C a une masse molaire moyenne en nombre qui peut être comprise entre 10.000 g/mol et 500.000 g/mol, de préférence comprise entre 20.000 et 200.000 g/mol. Le dibloc B-C est avantageusement constitué d'une fraction massique en C comprise entre 5 et 95 % et de préférence entre 15 et 85%.

**S'agissant du tribloc C-B-C,** C est en général constitué des mêmes monomères et éventuellement comonomères que le bloc C du dibloc B-C. Les deux blocs C du tribloc C-B-C peuvent être identiques ou différents. Ils peuvent être aussi différents par leur masse molaire mais constitués des mêmes monomères. Les blocs C du tribloc C-B-C peuvent être identiques ou différents du bloc C du dibloc B-C. Le bloc B est constitué des mêmes monomères et éventuellement comonomères que le bloc B du dibloc B-C. Les blocs B du tribloc C-B-C et du dibloc B-C peuvent être identiques ou différents.

Le tribloc C-B-C a en général une masse molaire moyenne en nombre qui peut être comprise entre 10.000 g/mol et 500.000 g/mol, de préférence comprise entre 20.000 et 200.000 g/mol. Avantageusement le tribloc C-B-C a les compositions suivantes en C et B exprimées en fraction massique, le total étant 100% :
C : entre 10 et 80 % et de préférence entre 15 et 70 %.
B : entre 90 et 20 % et de préférence entre 85 et 30 %.

**S'agissant du tribloc A-B-C,** C est constitué des mêmes monomères et éventuellement comonomères que le bloc C du dibloc B-C. Le bloc C du tribloc A-B-C, chaque bloc C du tribloc C-B-C et le bloc C du dibloc B-C peuvent être identiques ou différents. Le bloc B est constitué des mêmes monomères et éventuellement comonomères que le bloc B du dibloc B-C. Les blocs B du tribloc A-B-C, du tribloc C-B-C et du dibloc B-C peuvent être identiques ou différents.

La Tg ou la Tf de A est avantageusement supérieure à 23 °C et de préférence supérieure à 50 °C. A titre d'exemple de blocs A, on peut citer ceux qui dérivent de composés vinylaromatiques tels que styrène, α-méthyl styrène, vinyltoluène, et celles qui dérivent d'alkyl esters des acides acrylique et/ou méthacrylique ayant de 1 à 18 atomes de carbone dans la chaîne alkyle. Dans ce dernier cas les acrylates sont différents de ceux du bloc C pour respecter la condition de A et C non miscibles.

Le tribloc A-B-C a une masse molaire moyenne en nombre qui peut en général être comprise entre 10.000 g/mol et 500.000 g/mol, de préférence comprise entre 20.000 et 200.000 g/mol. Le tribloc A-B-C avantageusement a la composition suivante exprimée en fraction massique, le total étant 100% :
C : entre 10 et 80 % et de préférence entre 15 et 70 %.
B : entre 2 et 8 0% et de préférence entre 5 et 70 %.
A : entre 10 et 88 % et de préférence entre 15 et 85 %.

Les blocs A peuvent être fabriqués par tout moyen de polymérisation et en particulier par polymérisation radicalaire contrôlée. La polymérisation radicalaire controlée est connue. Les polymérisations radicalaires classiques ne permettent pas d'accéder à des polymères et copolymères à architecture contrôlée en raison notamment du faible temps de vie des radicaux, de leur réactivité élevée et du manque de stéréochimie des espèces intermédiaires. On entend par polymérisation radicalaire controlée une polymérisation radicalaire conventionnelle dans laquelle on effectue un contrôle d'au moins une des étapes choisies parmi l'amorçage, la propagation, la terminaison et le transfert. A titre d'exemple de contrôle on peut citer la désactivation réversible des macroradicaux en croissance. Cette désactivation réversible peut être provoquée par l'addition de nitroxydes dans le milieu de réaction. Un radical persistant est par exemple le TEMPO (2,2,6,6-tétraméthyl-1-pipéridinyloxy) qui capte les macroradicaux et conduit généralement à des homopolymères de polymolécularités très étroites, conférant ainsi un caractère vivant à la polymérisation radicalaire. On peut encore citer les molécules béta-phosphorylées et possédant un hydrogène en alpha de la fonction nitroxyde.

Les copolymères blocs B-C A-B-C et C-B-C utilisés comme dispersant dans les matériaux polymères de la présente invention peuvent être fabriqués par polymérisation anionique par exemple selon les procédés décrits dans les demandes de brevet EP 524.054 et EP 749.987 ou par polymérisation radicalaire et notamment par polymérisation radicalaire contrôlée..

Avantageusement la proportion de dispersant est de 1 à 35 parties en poids pour respectivement 99 à 65 parties en poids de polymère(s).

De préférence la proportion de dispersant est de 8 à 32 parties en poids pour respectivement 92 à 68 parties en poids de polymère(s).

**Selon une forme particulière de l'invention,** le dispersant comprend outre un des copolymères blocs C-B-C, A-B-C, au moins un polymère choisi parmi les coeur- écorce (E), les élastomères fonctionnalisés, les copolymères blocs A-B et/ou les caoutchoucs réactifs ATBN et CTBN.

**S'agissant du dibloc A-B** les blocs A et B sont incompatibles et ils sont constitués des mêmes monomères et éventuellement comonomères que les blocs A et les blocs B du tribloc A-B-C. Les blocs A et B peuvent être identiques ou différents des autre blocs A et B présents dans les autres copolymères blocs du modifiant choc dans le matériau thermodur.

Le dibloc A-B a en général une masse molaire moyenne en nombre qui peut être comprise entre 10.000 g/mol et 500.000 g/mol, de préférence comprise entre 20.000 et 200.000 g/mol. Le dibloc A-B est avantageusement constitué d'une fraction massique en B comprise entre 5 et 95% et de préférence entre 15 et 85%.

**S'agissant du copolymère coeur - écorce (E)** il se présente sous la forme de fines particules ayant un coeur en élastomère et au moins une écorce thermoplastique, la taille des particules est en général inférieure au µm et avantageusement comprise entre 50 et 500 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (méth)acrylate d'alkyle. Une autre famille de coeur est constituée par les homopolymères d'un (méth)acrylate d'alkyle et les copolymères d'un (méth)acrylate d'alkyle avec au plus 30% en moles d'un monomère vinylique. Le (méth)acrylate d'alkyle est avantageusement l'acrylate de butyle. Le monomère vinylique peut être le styrène, un alkylstyrène, l'acrylonitrile, le butadiène ou l'isoprène. Le coeur du copolymère (A) peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(méth)acrylate de butylène et le triméthylol propane triméthacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (méth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. A titre d'exemple on peut citer des copolymères coeur - écorce (E) ayant une écorce en polystyrène et des copolymères coeur - écorce (E) ayant une écorce en PMMA. Il existe aussi des copolymères coeur-écorce (E) ayant deux écorces , l'une en polystyrène et l'autre à l'extérieur en PMMA. Des exemples de copolymère (E) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

Avantageusement le coeur représente, en poids, 70 à 90% de (A) et l'écorce 30 à 10%.

A titre d'exemple de copolymère (E) on peut citer celui constitué (i) de 75 à 80 parties d'un coeur comprenant en moles au moins 93% de butadiène, 5% de styrène et 0,5 à 1 % de divinylbenzène et (ii) de 25 à 20 parties de deux écorces essentiellement de même poids l'une intérieure en polystyrène et l'autre extérieure en PMMA.

**Selon une deuxième forme particulière de l'invention,** le dispersan comprend au moins un copolymère bloc A-B-C et au moins un copolymère bloc A-B. Le modifiant choc comprend avantageusement entre 5 et 80% de dibloc A-B pour respectivement de 95 à 20% de tribloc A-B-C.

De plus l'avantage de ces compositions est qu'il n'est pas nécessaire de purifier le A-B-C à l'issue de sa synthèse. En effet les A-B-C sont en général préparés à partir des A-B et la réaction conduit souvent à un mélange de A-B et A-B-C qu'on sépare ensuite pour disposer de S-B-M.

**Selon une troisième forme particulière de l'invention** le dispersant comprend au moins un copolymère blocs A-B-C et au moins un polymère coeur-écorce (E). La proportion de coeur écorce par rapport au A-B-C peut être comprise entre 5 pour 1 et 1 pour 4, et de préférence entre 3 pour 1 et 1 pour 2.

**Selon une quatrième forme particulière de l'invention,** le dispersant comprend au moins un copolymère blocs A-B-C et au moins un caoutchouc réactif ATBN ou CTBN. La proportion de caoutchouc réactif par rapport au A-B-C peut être comprise entre 5 pour 1 et 1 pour 4, et de préférence entre 3 pour 1 et 1 pour 2.

### ATBN, CTBN, sont les abréviations respectives de :

CTBN : Carboxyl terminated random copolymer of butadiene and acrylonitrile.
ATBN : Amino terminated random copolymer of butadiene and acrylonitrile.

Ces produits sont des oligomères à base de butadiène et d'acrylonitrile terminés soit par des fonctions carboxyles soit par des fonctions amines. Le butadiène a une Tg très basse, ce qui est favorable pour obtenir un bon renforcement aux chocs.

Selon une forme avantageuse une partie du A-B-C peut être remplacée par un dibloc A-B. Cette partie peut être jusqu'à 70% en poids du A-B-C.

On ne sortirait pas du cadre de l'invention en remplaçant tout ou partie du tribloc A-B-C par un pentabloc C-A-B-A-C ou C-B-A-B-C. Ils peuvent être preparés par polymérisation anionique comme les di ou triblocs cités plus haut mais en utilisant un amorçeur difonctionnel. La masse molaire moyenne en nombre de ces pentablocs est dans les mêmes intervalles que celle des triblocs A-B-C. La proportion des deux blocs C ensemble, des deux blocs B ou A ensemble est dans les mêmes intervalles que les proportions de A, B et C dans le tribloc A-B-C.

### Dispersants particulièrement préférés par la demanderesse

**ABC1 :** il s'agit d'un copolymère tribloc A-B-C dans lequel A est du polystyrène, B est du polybutadiène et C du PMMA contenant 22% en fraction massique de Polystyrène, 9% en fraction massique de Polybutadiène et 69% en masse de polyméthacrylate de méthyle, obtenu par polymérisation anionique successivement d'un bloc polystyrène de masse molaire moyenne en nombre 27000 g/mol, d'un bloc polybutadiène de masse 11.000 g/mol et d'un bloc polyméthacrylate de méthyle de masse molaire moyenne en nombre 84000 g/mol. Ce produit a été préparé suivant le mode opératoire décrit dans EP 524.054 et dans EP 749.987. Ce produit présente trois transitions vitreuses, l'une de -90°C, l'autre de 95°C et la troisième de 130°C.

**ABC2 :** il s'agit d'un copolymère tribloc A-B-C dans lequel A est du polystyrène, B est du polybutadiène et C du PMMA contenant 12% en fraction massique de Polystyrène, 18% en fraction massique de Polybutadiène et 70% en masse de polyméthacrylate de méthyle, obtenu par polymérisation anionique successivement d'un bloc polystyrène de masse molaire moyenne en nombre 14000 g/mol, d'un bloc polybutadiène de masse 22.000 g/mol et d'un bloc polyméthacrylate de méthyle de masse molaire moyenne en nombre 85.000 g/mol. Ce produit a été préparé suivant le mode opératoire décrit dans EP 524.054 et dans EP 749.987. Ce produit présente trois transitions vitreuses, l'une de -90°C, l'autre de 95°C et la troisième de 130°C.

**ABC3 :** il s'agit d'un copolymère tribloc A-B-C dans lequel A est du polystyrène, B est du polybutadiène et C du PMMA contenant 24% en fraction massique de Polystyrène, 26% en fraction massique de Polybutadiène et 50% en masse de polyméthacrylate de méthyle, obtenu par polymérisation anionique successivement d'un bloc polystyrène de masse molaire moyenne en nombre 21000 g/mol, d'un bloc polybutadiène de masse 22.000 g/mol et d'un bloc polyméthacrylate de méthyle de masse molaire moyenne en nombre 43.000 g/mol. Ce produit a été préparé suivant le mode opératoire décrit dans EP 524.054 et dans EP 749.987. Ce produit présente trois transitions vitreuses, l'une de -90°C, l'autre de 95°C et la troisième de 130°C.

**ABC4 :** il s'agit d'un copolymère tribloc A-B-C dans lequel les blocs A et C sont identiques et sont du PMMA et le bloc B est un homopolymère de l'acrylate de butyle. Ce copolymère est obtenu par polymérisation radicalaire contrôlée. La masse molaire moyenne en nombre de l'acrylate de butyle est de 22.000 g/mol et la masse molaire moyenne en masse du copolymère totale est de 140.000 g/mol.

**ABC5** : il s'agit d'un copolymère tribloc A-B-C dans lequel les blocs A et C sont identiques et sont des copolymères de méthacrylate de méthyle (MMA) et de diméthyle acrylamide (DMA) et le bloc B est un homopolymère de l'acrylate de butyle.

A titre d'exemples,
• pour les matériaux polymères à base de PA, PPE/PA, PS, ABS, PMMA, PC, les dispersants de type ABC1 à ABC3 sont particulièrement préférés par la demanderesse,
• pour les matériaux polymères à base d'époxy, les dispersants de type ABC1 à ABC5 sont particulièrement préférés par la demanderesse,
• pour les matériaux polymères à base de PVDF , les dispersants de type ABC1 à ABC3 ou ABC4 sont particulièrement préférés par la demanderesse.

La présente invention concerne également le procédé de préparation des matériaux polymères comprenant les NTC et le(s) dispersant(s) décrits ci-dessus.

Le procédé de mélange peut utiliser différentes technologies telles que celles utilisées pour les caoutchoucs, les polymères, les liquides, selon la nature des polymères présents dans le mélange final. On peut citer les mélangeurs internes, les extrudeuses mono ou double vis, les Buss, les mélangeurs du type ultraturax, les mélangeurs à ultrasons ou tout type d'outil de mélange connu par l'homme de l'art.

Les compositions précédemment décrites peuvent être obtenues directement par mélange du ou des matériaux polymères, du ou des dispersants et des NTC ou par dilution via l'utilisation d'un mélange-maître ou master batch comme décrit dans WO 91/03057 ou US 5.646.990, EP 692.136 ou US 5.591.382 US 5.643.502 ou US 5.651.922, US 6.221.283.

Les mélange-maître peuvent être constitués de NTC et de dispersant(s) ou bien encore contenir une certaine quantité de matériau polymère ; la résine de dilution n'étant pas obligatoirement la même que celle entrant dans la composition du mélange-maître.

Pour les matériaux polymères thermodurcissables, selon la quantité de dispersant mise en oeuvre, on peut reprendre les conditions opératoires décrites dans WO 91/01 92415 en ajoutant simplement les NTC dans le mélange réactionnel :
Les matériaux thermodurcissables selon l'invention à faible pourcentage en dispersant(s) (≤10 parties en poids) peuvent être préparés à l'aide d'un réacteur agité conventionnel. Le polymère thermodurcissable est introduit dans le réacteur et portée quelques minutes à une température suffisante pour être fluide. Le dispersant comprenant le(s) copolymère(s) blocs est ensuite ajouté et malaxé à une température suffisante pour être fluide jusqu'à sa dissolution complète. Le temps de malaxage dépend de la nature du copolymère ajouté. On ajoute alors le durcisseur et on mélange pendant encore 5 minutes à une température suffisante pour être fluide pour obtenir un mélange homogène. La réaction époxy-durcisseur commence durant ce mélangeage et il doit donc être fixé aussi court que possible. Ces mélanges sont ensuite coulés et cuits dans un moule.

Pour les matériaux thermodurcissables avec un taux de dispersant supérieur à 10 parties en poids, un pré-mélange de la résine thermodurcissable et du dispersant contenant environ 10 % en masse de modifiant choc est réalisé selon la méthode suivante: après avoir porté le polymère thermodurcissable à une température suffisante pour être fluide pendant quelques minutes, le dispersant est ajouté et mélangé à une température suffisante pour être fluide jusqu'à sa dissolution complète. La masse de dispersant restante pour atteindre le taux désiré est alors mélangée à ce pré-mélange à l'aide par exemple d'une calandre ou d'un mélangeur bi-vis à une température suffisante pour être fluide pendant une heure. Le système résine thermodurcissable /dispersant choc obtenu est alors refroidi et cryobroyé et le durcisseur est ajouté. Le mélange final est pressé dans un moule à la température de cuisson désirée.

Les matériaux polymères selon l'invention peuvent avantageusement remplacer les matériaux polymères contenant des NTC de l'état de la technique et être utilisés dans de nombreux domaines, notamment en électronique (selon la température et leur structure, ils peuvent être conducteurs, semi-conducteurs ou isolants), en mécanique, par exemple pour le renfort des matériaux composites (les NTC sont cent fois plus résistants et six fois plus légers que l'acier) et électromécanique (ils peuvent s'allonger ou se contracter par injection de charge) On peut par exemple citer les matériaux destinés par exemple à l'emballage de composants électroniques, à la fabrication de conduites d'essence (fuel line), de revêtements ou coating antistatiques, dans des thermistors, des électrodes pour supercapacités.

### Exemples

Les produits suivants ont été mis en oeuvre:
Polymère époxy : il s'agit d'un éther diglycidique du Bisphénol A (DGEBA) de masse molaire 383 g/mol avec un nombre moyen de groupe hydroxyle pour un groupe époxy de n= 0.075, commercialisé par la société Ciba Geigy sous la référence commerciale LY556.
Durcisseur : il s'agit d'un durcisseur amine qui est une diamine aromatique, la 4,4'-Méthylènebis-(3-chloro-2,6-diéthylaniline) commercialisé par la société Lonza sous la référence commerciale LONZACURE M-CDEA. Ce produit est caractérisé par un point de fusion compris entre 87°C et 90°C et une masse molaire de 380 g/mol.

### Dispersant des particules

Il s'agit d'un copolymère tribloc A-B-C de type ABC3

### Particules de carbone

On utilise des nanotubes de carbone obtenus selon le procédé décrit dans WO 03/002456 A2. Ces nanotubes ont un diamètre compris entre 10 et 30 nm et une longueur > 0,4 µm. Ils sont de type multiparoi (MWT) non purifiés et non fonctionnalisés et se présentent en totalité ou à plus de 98% sous forme distincte c'est à dire non agrégée.

### Préparation des mélanges :

On chauffe 2 g de DGEBA à 135 °C, après liquéfaction, on ajoute 440 mg de tribloc ABC3, on laisse sous agitation à 135 °C pendant 3h00. Puis on ajoute 44 mg de NTC, on maintient l'agitation en température pendant 12h00. On rajoute ensuite 2 g du durcisseur MCDEA, on agite 5 min à 135 °C. Le mélange est ensuite coulé dans un moule et cuit pendant 5 heures à 135 °C.

## Revendications

1. Matériau polymère comprenant :
• 99 à 20 parties en poids de polymère(s),
• 0,1 à 80 parties en poids de nanotubes de carbone
• 0,05 à 80 parties en poids d'au moins un dispersant choisi parmi les copolymères à blocs A-B-C, B-C et/ou C-B-C dans lesquels:
➢ chaque bloc est relié à l'autre au moyen d'une liaison covalente ou d'une molécule intermédiaire reliée à l'un des blocs par une liaison covalente et à l'autre bloc par une autre liaison covalente,
➢ C présente une interaction de type chimique et/ou physique avec le matériau polymère et de préférence est miscible avec ledit matériau,
➢ B n'est pas miscible avec le matériau polymère et avec le bloc C et sa température de transition vitreuse Tg est inférieure à la température d'utilisation du matériau polymère,
➢ A n'est pas miscible avec le matériau polymère, le bloc B et le bloc C et sa Tg ou sa température de fusion Tf est supérieure à la Tg de B.

2. Matériau selon la revendication 1 dans lequel les blocs C des copolymères à blocs sont constitués de PMMA syndiotactique à au moins 60%.

3. Matériau selon la revendication 1 ou 2 dans lequel les blocs C des copolymères à blocs comprennent des monomères réactifs, avantageusement le (méth)acrylate de glycidyle et/ou le (méth)acrylate de tertiobutyle.

4. Matériau selon l'une quelconque des revendications précédentes dans lequel la Tg des blocs B des copolymères à blocs est inférieure à 0°C, de préférence inférieure à - 20 °C.

5. Matériau selon la revendication 4 dans lequel les blocs B des copolymères à blocs sont constitués en majorité de polybutadiène-1,4.

6. Matériau selon la revendication 5 dans lequel les diènes du bloc B sont hydrogénés.

7. Matériau selon la revendication 4 dans lequel le bloc B est constitué de poly(acrylate de butyle).

8. Matériau selon l'une quelconque des revendications précédentes dans lequel la Tg ou la Tf des blocs A est supérieure à 23°C, de préférence supérieure à 50°C..

9. Matériau selon la revendication 8 dans lequel A est du polystyrène.

10. Matériau selon l'une quelconque des revendications précédentes dans lequel la masse molaire moyenne en nombre du ou des dispersants peut être comprise entre 10.000 g/mol et 500.000 g/mol, et de préférence entre 20.000 g/mol et 200.000 g/mol.

11. Matériau selon l'une quelconque des revendications précédentes dans lequel la proportion de dispersant(s) est de 1 à 35% pour respectivement 99 à 65% de polymère(s).

12. Matériau selon l'une quelconque des revendications précédentes dans lequel la proportion de NTC représente de 0,1 à 30 parties en poids, et avantageusement de 0,5 à 20 parties en poids de la masse totale du matériau polymère.

13. Matériau selon l'une quelconque des revendications précédentes dans lequel les NTC ont un diamètre compris entre 0,4 et 50 nm et une longueur comprise 100 et 100.000 fois leur diamètre, de préférence sont sous forme multi-parois (MWT), leur diamètre étant compris entre 5 et 30 nm et leur longueur étant supérieure ou égale à 0,3 µm.

14. Matériau selon l'une quelconque des revendications précédentes dans lequel le ou les dispersants comprend au moins un des copolymères blocs C-B-C, A-B-C et au moins un polymère choisi parmi les coeur- écorce (E), les élastomères fonctionnalisés, les copolymères blocs A-B, les blocs A étant de préférence une masse molaire moyenne en nombre qui peut être comprise entre 10.000 g/mol et 500.000 g/mol, et les caoutchoucs réactifs ATBN ou CTBN.

15. Matériau selon la revendications 14 dans lequel le dispersant comprend au moins un copolymère bloc A-B-C et au moins un copolymère bloc A-B et/ou au moins un polymère coeur-écorce (E) et/ou au moins un caoutchouc réactif ATBN ou CTBN et éventuellement un copolymère bloc A-B.

16. Matériau selon l'une quelconque des revendications précédentes dans lequel tout ou partie du tribloc A-B-C est remplacée par un pentabloc C-A-B-A-C et/ou C-B-A-B-C.

17. Matériau selon l'une quelconque des revendications précédentes dans lequel le ou les polymères sont thermoplastiques ou thermodurcissables, rigides ou élastomériques, amorphes, cristallins et/ou semi-cristallins, homopolymères, copolymères, seuls ou en mélange, éventuellement avec un ou plusieurs additifs, adjuvants et/ou charges, tels que stabilisants, plastifiants, catalyseurs de polymérisation, colorants, pigments, lubrifiants, ignifugeants, renforts et/ou charges, solvants de polymérisation, et de préférence contiennent des fonctions de type époxyde et/ou glycidyle, éther, de type acide mono-, di- ou polycarboxylique, insaturé ou non, aromatique ou non, ou dérivé fonctionnel d'acide tel qu'anhydride, ester, amide et/ou imide, de type vinyle, vinyle aromatique.

18. Matériau selon l'une quelconque des revendications précédentes dans lequel le ou les polymères sont choisis parmi PA, PPE/PA, PS, ABS, PMMA, PC, polymères à base d'époxy et/ou polymères à base de PVDF.

19. Procédé de préparation d'un matériau polymère tel que décrit dans l'une quelconque des revendications 1 à 18 soit directement par mélange du ou des matériaux polymères, du ou des dispersants et des NTC ou par dilution via l'utilisation d'un mélange-maître, le mélange-maître pouvant être constitué de NTC et de dispersant(s) ou bien encore contenir une certaine quantité de matériau polymère(s) ; le ou les polymère(s) de dilution n'étant pas obligatoirement le même que celui entrant dans la composition du mélange-maître.

20. Utilisation du matériau polymère tel que défini dans l'une quelconque des revendications 1 à 18 pour l'emballage de composants électroniques, la fabrication de conduites d'essence (fuel line), de revêtements ou coating antistatiques, dans des thermistors, des électrodes pour supercapacités.

## Claims

1. Polymer material comprising:
• 99 to 20 parts by weight of polymer(s);
• 0.1 to 80 parts by weight of carbon nanotubes; and
• 0.05 to 80 parts by weight of at least one dispersant chosen from A/B/C, B/C and/or C/B/C block copolymers in which:
➢ each block is linked to another by means of a covalent bond or an intermediate molecule linked to one of the blocks via a covalent bond and to the other block via another covalent bond,
➢ C provides an interaction of the chemical and/or physical type with the polymer material and is preferably miscible with the said material,
➢ B is not miscible with the polymer material and with the block C, and its glass transition temperature T_{g} is below the usage temperature of the polymer material and
➢ A is not miscible with the polymer material, the block B and the block C, and its T_{g} or its melting point Tₘ is above the Tg of B.

2. Material according to Claim 1, in which the blocks C of the block copolymers are formed from PMMA syndiotactic to at least 60%.

3. Material according to Claim 1 or 2, in which the the blocks C of the block copolymers comprise reactive monomers, advantageously glycidyl (meth)acrylate and/or *tert*-butyl(meth)acrylate.

4. Material according to any one of the preceding claims, in which the Tg of the blocks B of the block copolymers is below 0°C, preferably below -20°C.

5. Material according to Claim 4, in which the blocks B of the block copolymers consist mostly of 1, 4-polybutadiene.

6. Material according to claim 5, in which the dienes of the block B are hydrogenated.

7. Material according to Claim 4, in which the block B consists of polybutyl acrylate.

8. Material according to any one of the preceding claims, in which the Tg or the Tₘ of the blocks A is above 23°C, preferably above 50°C.

9. Material according to Claim 8, in which A is polystyrène.

10. Material according to any one of the preceding claims, in which the number-average molar mass of the dispersant(s) may be between 10 000 g/mol and 500 000 g/mol, preferably between 20 000 g/mol and 200 000 g/mol.

11. Material according to any one of the preceding claims, in which the proportion of dispersant(s) is 1 to 35% per 99 to 65% of polymer(s) respectively.

12. Material according to any one of the preceding claims, in which the proportion of CNT represents 0.1 to 30 parts by weight and advantageously 0.5 to 20 parts by weight of the total mass of the polymer material.

13. Material according to any one of the preceding claims, in which the CNTs have a diameter of between 0.4 and 50 nm and a length of between 100 and 100 000 times their diameter, preferably these being in the form of multi-walled nanotubes (MWNT), their diameter being between 5 and 30 nm and their length being 0.3 µm or higher.

14. Material according to any one of the preceding claims, in which the dispersant or dispersants comprise at least one of the C/B/C or A/B/C block copolymers and at least one polymer chosen from core-shell copolymers (E), functionalized elastomers, A/B block copolymers, the blocks A preferably having a number-average molar mass that may be between 10 000 g/mol and 500 000 g/mol, and ATBN or CTBN reactive rubbers.

15. Material according to Claim 14, in which the dispersant includes at least one A/B/C block copolymer and at least one A/B block copolymer and/or at least one core-shell copolymer (E) and/or at least one ATBN or CTBN reactive rubbers and optionally an A/B block copolymer.

16. Material according to any one of the preceding claims, in which all or part of the A/B/C triblock is replaced with a C/A/B/A/C and/or C/B/A/B/C pentablock.

17. Material according to any one of the preceding claims, in which the polymer or polymers are thermoplastics or thermosets, whether rigid or elastomeric amorphous, crystalline and/or semicrystalline, homopolymers or copolymers by themselves or as a blend, optionally with one or more additives, adjuvants and/or fillers, such as stabilizers, plasticizers, polymerization catalysts, dyes, pigments, lubricants, fire retardants, reinforcements and/or fillers and polymerization solvents, and preferably they contain functional groups of the epoxide and/or glycidyl or ether type, of the monocarboxylic, dicarboxylic or polycarboxylic acid type, whether saturated or unsaturated, whether aromatic or non-aromatic, or an acid-derived functional group, such as an anhydride, ester, amide and/or imide, of the vinyl or vinylaromatic type.

18. Material according to any one of the preceding claims, in which the polymer or polymers are chosen from PA, PPE/PA, PS, ABS, PMMA, PC, epoxy-based polymers and/or PVDF-based polymers.

19. Method of preparing a polymer material as described in any one of Claims 1 to 18, either direct by mixing the polymer material or materials, the dispersant or dispersants and the CNTS, or by dilution via the use of a masterbatch, the masterbatch possibly consisting of CNT and dispersant(s) or else they may contain a certain amount of polymer material(s), the dilution polymer or polymers not necessarily being the same as that or those used in the composition of the masterbatch.

20. Use of the polymer material as defined in any one of Claims 1 to 18 for the packaging of electronic components, the manufacture of fuel lines, antistatic coatings, in thermistors, electrodes for supercapacitors.

## Patentansprüche

1. Polymermaterial umfassend:
99 bis 20 Gewichtsteile Polymer(e),
• 0,1 bis 80 Gewichtsteile Kohlenstoff-Nanoröhren,
• 0,05 bis 80 Gewichtsteile mindestens eines Dispergiermittels, das unter den Blockcopolymeren A-B-C, B-C und/oder C-B-C ausgewählt ist, bei denen:
➢ jeder Block an den anderen über eine kovalente Bindung oder über ein Zwischenmolekül gebunden ist, welches an einen der Blöcke über eine kovalente Bindung und an den anderen Block über eine andere kovalente Bindung gebunden ist,
➢ C eine Wechselwirkung vom chemischen und/oder physikalischen Typ mit dem Polymermaterial zeigt und vorzugsweise mit dem Material mischbar ist,
➢ B nicht mit dem Polymermaterial und mit dem Block C mischbar ist und seine Glasübergangstemperatur Tg kleiner als die Verwendungstemperatur des Polymermaterials ist,
➢ A nicht mit dem Polymermaterial, dem Block B und dem Block C mischbar ist und seine Schmelztemperatur Tf gröger als Tg von B ist.

2. Material nach Anspruch 1, bei dem die Blöcke C der Blockcopolymere zu mindestens 60 % aus syndiotaktischem PMMA aufgebaut sind.

3. Material nach Anspruch 1 oder 2, bei dem die Blöcke C der Blockcopolymeren reaktive Monomere enthalten, vorteilhaft Glycidyl(meth)acrylat und/oder tert-Butyl(meth)acrylat.

4. Material nach einem der vorhergehenden Ansprüche, bei dem die Tg der Blöcke B der Blockcopolymere unter 0 °C und vorzugsweise unter -20 °C liegt.

5. Material nach Anspruch 4, bei dem die Blöcke B der Blockcopolymere überwiegend aus Poly(1,4-butadien) bestehen.

6. Material nach Ansprüche 5, bei dem die Diene des Blocks B hydriert sind.

7. Material nach Anspruch 4, bei dem der Block B aus Poly(butylacrylat) besteht.

8. Material nach einem der vorhergehenden Ansprüche, bei dem Tg oder Tf der Blöcke A größer als 23 °C und vorzugsweise größer als 50 °C ist.

9. Material nach Anspruch 8, bei dem A Polystyrol ist.

10. Material nach einem der vorhergehenden Ansprüche, bei dem die zahlenmittlere Molmasse des Dispergiermittels oder der Dispergiermittel im Bereich von 10.000 bis 500.000 g/mol und vorzugsweise 20.000 bis 200.000 g/mol liegen kann.

11. Material nach einem der vorhergehenden Ansprüche, bei dem der Anteil an Dispergiermittel(n) 1 bis 35 % auf 99 bis 65 % Polymer(e) beträgt.

12. Material nach einem der vorhergehenden Ansprüche, bei dem bei dem der Anteil an CNT 0,1 bis 30 Gewichtsteile und vorteilhaft 0,5 bis 20 Gewichtsteile des Gesamtgewichts des Polymermaterials ausmacht.

13. Material nach einem der vorhergehenden Ansprüche, bei dem die CNT einen Durchmesser im Bereich von 0,4 bis 50 nm und eine Länge im Bereich des 100 bis 100.000-fachen ihres Durchmessers aufweisen, wobei sie vorzugsweise mehrwandig (MWT) sind und ihr Durchmesser im Bereich von 5 bis 30 nm liegt und ihre Länge größer oder gleich 0,3 µm ist.

14. Material nach einem der vorhergehenden Ansprüche, bei dem das oder die Dispergiermittel zumindest eines der Blockcopolymere C-B-C, A-B-C und zumindest ein Polymer umfassen, das unter den Kern-Schale-Polymeren (E), den funktionalisierten Elastomeren, den Blockcopolymeren A-B, wobei die Blöcke A vorzugsweise eine zahlenmittlere Molmasse aufweisen, die im Bereich von 10.000 bis 500.000 g/mol liegen kann, und reaktiven ATBN- oder CTBN-Kautschuken ausgewählt ist.

15. Material nach Anspruch 14, bei dem das Dispergiermittel zumindest ein Blockcopolymer A-B-C und zumindest ein Blockcopolymer A-B und/oder zumindest ein Kern-Schale-Polymer (E) und/oder zumindest einen reaktiven ATBN- oder CTBN-Kautschuk und gegebenenfalls ein Blockcopolymer A-B umfasst.

16. Material nach einem der vorhergehenden Ansprüche, bei dem der Dreiblock A-B-C ganz oder teilweise durch einen Fünferblock C-A-B-A-C und/oder C-B-A-B-C ersetzt ist.

17. Material nach einem der vorhergehenden Ansprüche, bei dem das oder die Polymer(e) thermoplastisch oder wärmehärtbar, starr oder elastomer, amorph, kristallin und/oder semikristallin Homopolymere, Copolymere sind, die einzeln oder als Gemisch gegebenenfalls mit einem oder mehreren Additiven, Hilfsstoffen und/oder Füllstoffen, wie Stabilisatoren. Weichmachern. Polymerisationskatalysatoren, Farbstoffen, Pigmenten, Gleitmitteln, Flammschutzmitteln, Verstärkungsmitteln und/oder Füllstoffen, Lösemitteln für die Polymerisation vorliegen, und vorzugsweise Funktionen vom Typ Epoxy und/oder Glycidyl, Ether, vom Typ einer gesättigten oder ungesättigten, aromatischen oder nicht aromatischen Mono-, Di-oder Polycarbonsäure oder eines funktionellen Säurederivats, wie ein Anhydrid, einen Ester, ein Amid und/oder ein Imid, vom Vinyltyp, vom aromatischen Vinyltyp aufweisen.

18. Material nach einem der vorhergehenden Ansprüche, bei dem das oder die Polymer(e) unter PA, PPE/PA, PS, ABS, PMMA, PC, Polymeren auf Epoxybasis und/oder Polymeren auf PVDF-Basis ausgewählt sind.

19. Verfahren zur Herstellung eines wie in einem der Ansprüche 1 bis 18 beschriebenen Polymermaterials entweder durch direktes Mischen des oder der Polymermaterialien, des oder der Dispergiermittel und der CNT oder durch Verdünnen über die Verwendung eines Masterbatch, wobei der Masterbatch aus CNT und Dispergiermittel(n) bestehen oder auch eine bestimmte Menge an Polymermaterial(ien) enthalten kann, wobei das oder die Polymer(e) der Verdünnung nicht zwingend dem in der Zusammensetzung des Masterbatch entsprechen.

20. Verwendung des wie in einem der Ansprüche 1 bis 18 definierten Polymermaterials zur Verpackung von Elektronikkomponenten, zur Herstellung von Kraftstoffleitungen (Fuel line), antistatischen Überzügen oder Beschichtungen, in Thermistoren, Elektroden für Superkapazitäten.
